# EUROPÄISCHE PATENTSCHRIFT

(11) **EP 2 168 882 B1**
(45) Veröffentlichungstag und Bekanntmachung des Hinweises auf die Patenterteilung: **19.02.2014**
(21) Anmeldenummer: 09011957.9
(22) Anmeldetag: 19.09.2009
(51) Int. Cl.: B65D 6/18, B65D 5/00, B65D 21/02, B65D 85/34

(54) **Stapeleinheit**
Stacking unit
Unité d'empilement

(30) Priorität: 24.09.2008 DE 202008012674 U
(43) Veröffentlichungstag der Anmeldung: 31.03.2010
(73) Patentinhaber: Aldi Einkauf GmbH & Co. oHG, 45476 Mülheim/Ruhr (DE)
(72) Erfinder: Ochsenschläger, Robert, 45470 Mülheim an der Ruhr (DE); Ernst, Peter, 45478 Mülheim an der Ruhr (DE)
(74) Vertreter: Nunnenkamp, Jörg

(56) Entgegenhaltungen:
- WO-A1-89/01900
- DE-T2- 69 109 835
- DE-U1- 20 106 967

## Beschreibung

Die Erfindung betrifft eine Stapeleinheit aus wenigstens zwei übereinander angeordneten Transportbehältern, wobei der jeweilige Transportbehälter aus Pappe, Wellpappe, Kunststoff oder dergleichen hergestellt ist und einen Boden sowie Querwände und Längswände aufweist, wobei ferner die beiden Transportbehälter zumindest im Bereich ihrer gemeinsamen Stapelebene mit in Zentrierausnehmungen eingreifenden Zentriermitteln zur gegenseitigen temporären Fixierung ausgerüstet sowie der eine Transportbehälter als Einwegverpackung und der andere Transportbehälter als Mehrwegverpackung ausgestaltet sind, und wobei jeweilige Längswände des Transportbehälters mit den Zentriermitteln und/oder den Zentrierausnehmungen ausgerüstet sind.

Im Stand der Technik werden unter anderem Behälter aus Kunststoff beschrieben, die sich insbesondere zum Transport und zur Lagerung von Gemüse und Obst eignen. Solche Waren erfordern im allgemeinen eine leichte Handhabung und große Stabilität bei geringem Gewicht der zugehörigen Transportverpackung. Zu diesem Zweck schlägt die CH 517 624 vor, dass der Behälterboden mit nutenförmigen Ausnehmungen für den Eingriff eines Gabelstaplers ausgerüstet wird.

Daneben sind zusammenklappbare Kisten als Transportverpackungen aus der Praxis bekannt, die sich mehrfach verwenden lassen und als Mehrwegverpackung fungieren. Derartige Mehrwegverpackungen bzw. Mehrwegkisten lassen sich nach Entfernen der Ware zusammenklappen, so das bei ihrem (Rück-)Transport ein nur geringes Volumen beobachtet wird.

Neben diesen Mehrwegverpackungen sind auch Einwegverpackungen bekannt, wie sie beispielsweise in dem Gebrauchsmuster DE 80 20 787 U1 beschrieben werden. Hier sind im Querschnitt dreieckförmige Vorsprünge realisiert, um eine Stützwirkung auf das im Behälter befindliche Gut ausüben zu können.

Eine Stapeleinheit des eingangs beschriebenen Aufbaus ist durch die DE 201 06 967 U1 bekannt geworden. Hier geht es um einen Faltbehälter, welcher in etwa die Abmessungen einer standardisierten Euro-Kiste aufweist. Unter dem Boden des Faltbehälters ist eine Platte als Stapelsicherung angebracht und randseitig mit Falzlaschen ausgerüstet.

Darüber hinaus werden Stapeleinheiten in der EP 0 394 549 A1 sowie der DE 696 01 474 T2 beschrieben. Dabei kommen jeweils Einwegverpackungen zum Einsatz. Denn die Obst- oder Gemüsekiste entsprechend der EP 0 394 549 A1 ist aus einem einteiligen Stanzzuschnitt aus Vollpappe hergestellt. Um die nötige Stabilität zu erreichen, sind zwei Längswände, zwei Stirnwände und Klebelaschen für eine Vier-Ecken-Klebung vorgesehen.

Darüber hinaus ist jede Stirnwand mit innenseitig angeklebten hohlen Eckstützen ausgerüstet. Auf die beiden Eckstützen jeder Stirnwand ist ein Deckund Stapelstreifen aufgefaltet. Dieser Deck- und Stapelstreifen verfügt über Stapelarretierungen, die außen an Stirnwänden einer darauf gestapelten Kiste anliegen, die hierzu mit Ausnehmungen ausgerüstet ist.

Im Rahmen der DE 696 01 474 T2 wird eine Faltschachtel beschrieben, die mit Verstärkungshülsen ausgerüstet ist, welche den gefüllten Kisten ausreichende Festigkeit und Steifigkeit in einem Stapel verleihen. Die Verstärkungshülsen wirken also einer unzulässigen Verformung der Kisten entgegen und machen einen Stapel aus gefüllten Kisten möglichst stabil. Zu diesem Zweck greifen Ansätze auf der Oberseite jeder Kiste in Aussparungen auf der Unterseite der darüberliegenden Kiste ein. Auf diese Weise können sich in einem Stapel die Kisten nicht relativ zueinander in Querrichtung verschieben und lässt sich eine größere Stabilität des Stapels erhalten.

Der Stand der Technik kennt also einerseits Einwegverpackungen bzw. Einwegbehälter überwiegend aus Pappe oder Wellpappe, die sich auch zu Stapeln übereinander anordnen lassen. Darüber hinaus werden meistens zusammenklappbare Mehrwegverpackungen in Gestalt von Transportbehältern aus Kunststoff beschrieben, die sich im Allgemeinen nicht stapeln lassen. Das stellt so lange kein Problem dar, wie sich die Einwegverpackungen und die Mehrwegverpackungen in voneinander völlig getrennten Kreisläufen bewegen, was bisher der Fall war und ist.

Der Erfindung liegt das technische Problem zugrunde, eine Stapeleinheit zur Verfügung zu stellen, bei welcher die verschiedenen Verpackungen problemlos zusammengeführt werden können.

Zur Lösung dieser technischen Problemstellung ist eine Stapeleinheit nach Anspruch 1 vorgesehen. - Die beiden Transportbehälter sind regelmäßig aus unterschiedlichen Materialien gefertigt. Beispielsweise mag der obere Transportbehälter aus Pappe oder Wellstoff bestehen, während der untere Transportbehälter aus Kunststoff hergestellt ist, oder umgekehrt.

Die Erfindung liefert also zum ersten mal einen Stapel respektive eine Stapeleinheit aus zwei verschiedenen, insbesondere materialverschiedenen, Transportbehältern. Tatsächlich ist der eine Transportbehälter als Einwegverpackung und meistens aus Pappe oder Wellpappe gefertigt. Demgegenüber handelt es sich bei dem anderen Transportbehälter um eine Mehrwegverpackung, die aus Kunststoff hergestellt ist. Beide unterschiedlichen Transportbehälter sind nun kompatibel zueinander ausgebildet, weil sie zumindest im Bereich ihrer gemeinsamen Stapelebene mit Zentriermitteln und komplementären Zentrierausnehmungen ausgerüstet sind, die ineinander greifen. Dabei sorgt dieses Ineinandergreifen dafür, dass die Transportbehälter sowohl in Quer- als auch Längsrichtung temporär zueinander fixiert werden, also ein stabiler Stapel gebildet wird bzw. gebildet werden kann.

Das heißt, die Erfindung hat den Gedanken der Stapelbarkeit von Einwegverpackungen entsprechend beispielsweise der EP 0 394 549 A1 auf die Stapelung von Einwegverpackungen und Mehrwegverpackungen erweitert, was voraussetzt, dass die zugehörigen Verpackungen bzw. Transportbehälter über miteinander kompatible Zentrierausnehmungen und hierin eingreifende Zentriermittel in der gemeinsamen Stapelebene zur gegenseitigen temporären Fixierung verfügen.

Dabei sind die jeweiligen Längswände des Transportbehälters mit den Zentriermitteln und/oder Zentrierausnehmungen ausgerüstet. Bei den Zentriermitteln handelt es sich um Zentrierlaschen, die an die Zentrierausnehmungen von ihrer Größe her angepasst sind. Die Zentrierausnehmungen selbst sind als Zentriertaschen ausgeführt.

Durch die Anbringung der Zentriermittel und Zentrierausnehmungen bzw. der Zentrierlaschen und Zentriertaschen an den jeweiligen Längswänden des zugehörigen Transportbehälters wird eine besonders vorteilhafte Lagefixierung der Transportbehälter gegeneinander erreicht. Denn die in die Zentrierausnehmungen eingreifenden und hieran angepassten Zentriermittel unterbinden durch ihre Anbringung an den beiden Längswänden Längsbewegungen der Transportbehälter zueinander. Hinzu kommt, dass die Größenanpassung der Zentriermittel und Zentrierausnehmungen zueinander auch Querbewegungen der Transportbehälter zueinander verhindert.

Dabei verfügen sowohl die Zentriermittel als auch die Zentrierausnehmungen über ihre jeweils größte Ausdehnung in Längsrichtung des jeweiligen Transportbehälters. Dies aus der Erkenntnis heraus, dass etwaige den Stapel respektive die Stapeleinheit auflösende Kräfte überwiegend in der Längsrichtung der jeweiligen Transportkisten angreifen. In dieser Längsrichtung liegen die jeweiligen Zentriermittel und Zentrierausnehmungen über einen besonders großen Bereich aneinander, weshalb derartigen und den Stapel auflösenden Kräften besondere Rechnung getragen und diesen entgegengewirkt wird.

Grundsätzlich können die Zentriermittel und zugehörige Zentrierausnehmungen aber auch jeweils über Eck an den zugehörigen mindestens zwei oder sämtlichen vier Ecken des zumeist als offenes Quader ausgeführten Transportbehälters angeordnet werden. Dann sind die jeweiligen Längswände und Querwände des Transportbehälters mit den fraglichen Zentriermitteln und/oder Zentrierausnehmungen ausgerüstet. Dabei finden sich die Zentriermittel und die Zentrierausnehmungen überwiegend im Bereich der gemeinsamen Stapelebene benachbarter Transportbehälter. Diese Stapelebene ist diejenige Ebene, welche von dem oberen Rand der Längswände und/oder Querwände respektive dem darauf aufliegenden Boden des darüber angeordneten Transportbehälters jeweils aufgespannt wird.

Indem nun die Zentriermittel und Zentrierausnehmungen in dieser Stapelebene angeordnet sind, sorgen sie dafür, dass die beiden übereinander angeordneten Transportbehälter eine gegenseitige temporäre Fixierung zueinander erfahren, also in der Stapelebene nicht gegeneinander bewegt werden können. Dabei ist die Fixierung selbstverständlich nur vorläufiger Art, weil der Verbund aus den beiden Transportbehältern durch beispielsweise Abnehmen des oberen Transportbehälters von dem unteren Transportbehälter problemlos wieder aufgehoben werden kann.

Um das Aufsetzen und gegenseitige Eingreifen der Zentriermittel und Zentrierausnehmungen zu erleichtern, schlägt die Erfindung vor, dass das jeweilige Zentriermittel respektive die an dieser Stelle zumeist realisierte Zentrierlasche mit wenigstens einer Einführschräge ausgerüstet ist. Sobald diese Einführschräge entlang einer Kante der Zentrierausnehmung bzw. Zentriertasche entlang gleitet, wird durch diesen Vorgang die Zentrierlasche automatisch in die Zentriertasche eingeführt und greift am Ende dieses Zentriervorganges nahezu formschlüssig in die Zentriertasche ein.

Bei der Einwegverpackung handelt es sich im Allgemeinen um einen Stanzzuschnitt aus Wellpappe und hier insbesondere aus doppelwelliger Wellpappe. Solche doppelwellige Wellpappe zeichnet sich durch eine Kombination von zwei Wellen, meistens einer Feinwelle und einer Mittelwelle aus, die miteinander verbunden sind. Die Feinwelle wird auch als B-Welle bezeichnet, während die Mittelwelle eine C-Welle darstellt. Im Übrigen verfügt die eingesetzte Einwegverpackung aus dem Stanzzuschnitt meistens über eine Vier-Ecken-Klebung, die ihr eine besonders hohe Stabilität in Verbindung mit dem Rückgriff auf doppelwellige Wellpappe verleiht. Hierzu trägt ergänzend bei, dass im Eckbereich die Längswand doppellagig, vorzugsweise sogar dreilagig ausgeführt ist und die beiden Stirnwände bzw. Querwände ebenfalls über eine doppellagige Ausgestaltung verfügen, was selbstverständlich nicht zwingend ist.

Dagegen ist die Mehrwegverpackung regelmäßig aus Kunststoff hergestellt, wobei sich ein thermoplastischer Kunststoff wie beispielsweise Polypropylen (PB) oder auch Polyethylen (PE) als besonders günstig erwiesen hat. Dies um so mehr, als solche Kunststoffe üblicherweise und in großen Mengen für Haushaltsartikel eingesetzt werden und sich leicht reinigen lassen, was für den Mehrweggebrauch unerlässlich ist.

Im Ergebnis wird eine Stapeleinheit, also ein Stapel, aus wenigstens zwei übereinander angeordneten Transportbehältern unter Schutz gestellt, welcher sich dadurch auszeichnet, dass zwei verschiedene Transportbehälter, nämlich eine Einwegverpackung und eine Mehrwegverpackung, einen stapelbaren Verbund bilden, was aufgrund der aneinander angepassten Zentriermittel und zugehörigen Zentrierausnehmungen problemlos gelingt. Meistens entsprechen sich auch die Außenabmessungen der jeweils übereinander zu stapelnden Transportbehälter. Diese sind jeweils als offene Quader gestaltet und auf diese Weise zur Aufnahme von Obst und Gemüse besonders prädestiniert.

Im Rahmen der Erfindung gelingt es nun, beispielsweise mit Obst und Gemüse aus Übersee beladene Einwegverpackungen und Mehrwegverpackungen mit darin aufgenommenem Obst und Gemüse aus Europa gemeinsam zu konfektionieren. Das ist für die Logistik von besonderer Bedeutung, weil nun Stapel aus den verschiedenen Transportbehältern unschwer gebildet und an einzelne Ladengeschäfte versandt werden können. In den Ladengeschäften lassen sich die Stapel problemlos wieder entstapeln und können sogar die Einwegverpackungen und Mehrwegverpackungen für die Warenpräsentation gemeinsam und in einem Stapel genutzt werden. Das heißt die Kreisläufe von einerseits Einwegverpackungen und andererseits Mehrwegverpackungen, insbesondere zur Aufnahme von Obst und Gemüse, werden zusammengeführt und die jeweiligen Transportverpackungen zu Stapeleinheiten vereinigt. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: eine erfindungsgemäße Stapeleinheit bzw. einen erfindungsgemäßen Stapel aus zwei übereinander angeordneten Transportbehältern, nämlich einer unten angeordneten Einwegverpackung und einer darüber befindlichen Mehrwegverpackung,
- Fig. 2: die Einwegverpackung in einer Aufsicht,
- Fig. 3: die Mehrwegverpackung in ausgeklapptem bzw. ausgefaltetem Zustand in einer Aufsicht,
- Fig. 4: den Gegenstand nach Fig. 3 in zusammengeklapptem Zustand,
- Fig. 5: die Einwegverpackung mit der darüber angeordneten Mehrwegverpackung bei der Herstellung des Stapels und
- Fig. 6: die Mehrwegverpackung vom Boden ausgesehen im Eckbereich.

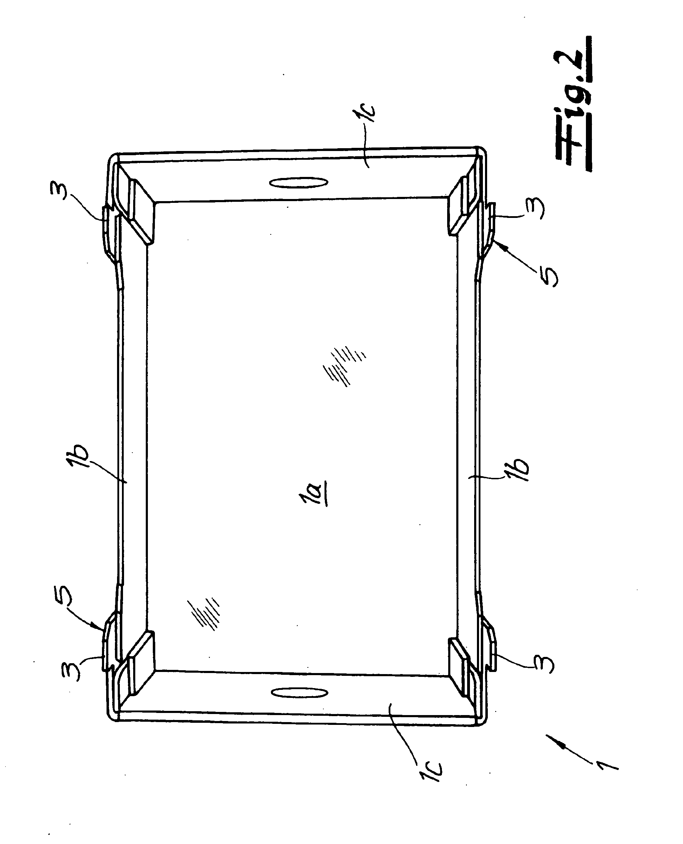

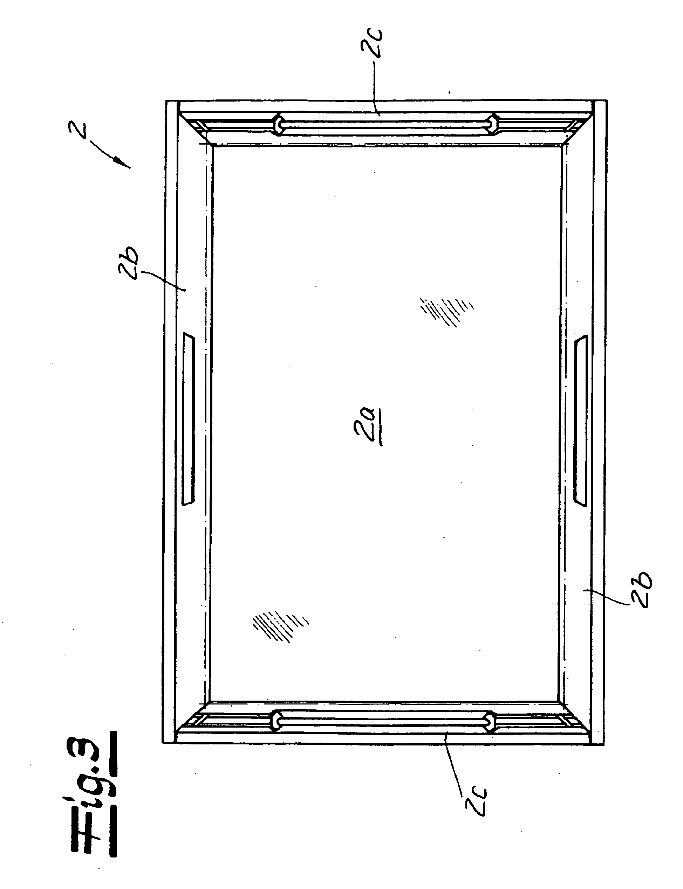

In den Figuren ist eine Stapeleinheit bzw. ein Stapel aus zwei übereinander angeordneten Transportbehältern 1, 2 dargestellt. Selbstverständlich können auch mehr als die beiden Transportbehälter 1, 2 zu einem Stapel zusammengefasst werden. Dabei ist der jeweilige Transportbehälter 1, 2 aus Pappe, Wellpappe, Kunststoff oder dergleichen hergestellt und verfügt über einen Boden 1a bzw. 2a und Längswände 1b respektive 2b sowie Querwände 1c bzw. 2c (vgl. Figuren 2 und 3).

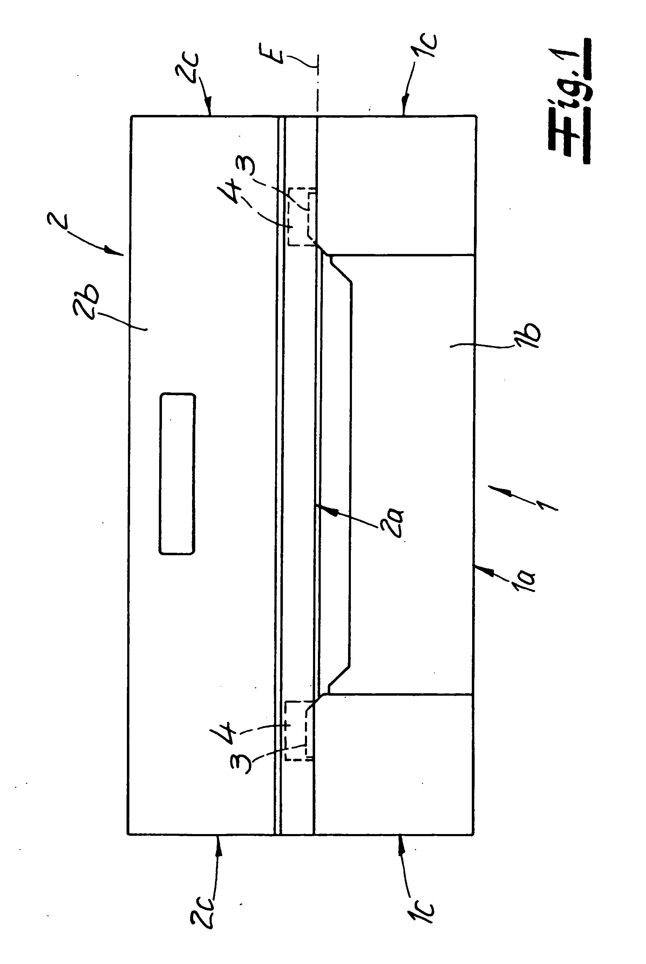

Anhand einer vergleichenden Betrachtung der Figuren 1 und 5 sowie 2 und 3 wird deutlich, dass die beiden Transportbehälter 1, 2 jeweils als nach oben offene Quader ausgeführt sind und sich besonders zur offenen Aufnahme von Obst oder Gemüse eignen. Darüber hinaus entsprechen sich die beiden Transportbehälter 1, 2 von ihren Außenabmessungen her. Das heißt, die Länge der jeweiligen Längswände 1 b bzw. 2b und der Querwände 1 c respektive 2c ist außen im Wesentlichen gleich. Auch die Fläche der zugehörigen Böden 1a respektive 2a entspricht sich im Wesentlichen.

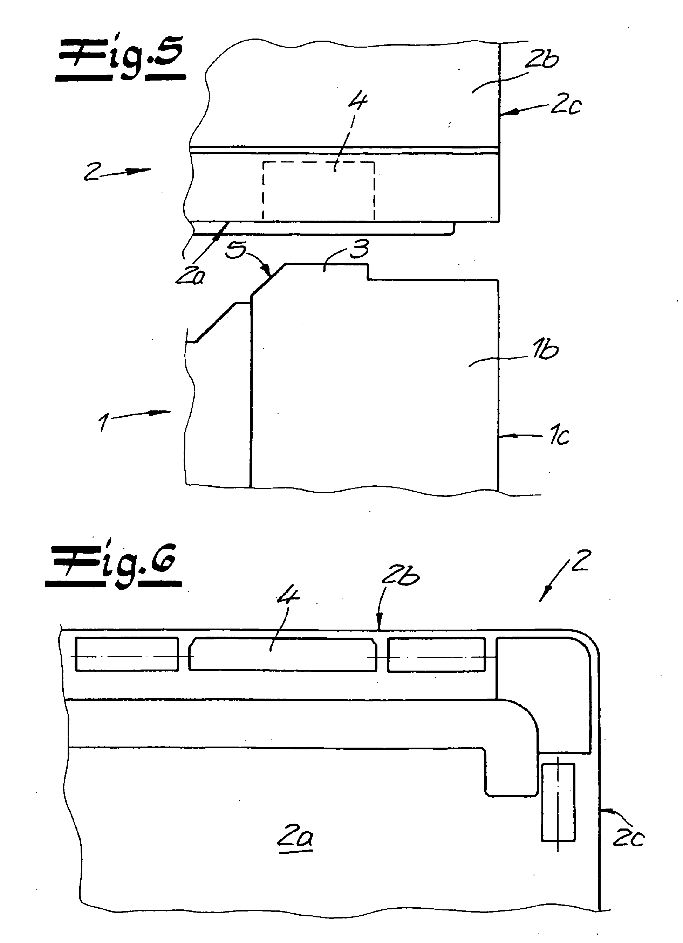

Beide Transportbehälter 1, 2 verfügen nun erfindungsgemäß über einerseits Zentriermittel 3 und andererseits Zentrierausnehmungen 4, wie man sie am besten in den Figuren 5 und 6 erkennt. Bei den Zentriermitteln 3 handelt es sich um Zentrierlaschen 3. Die Zentrierausnehmungen 4 sind als Zentriertaschen 4 ausgebildet.

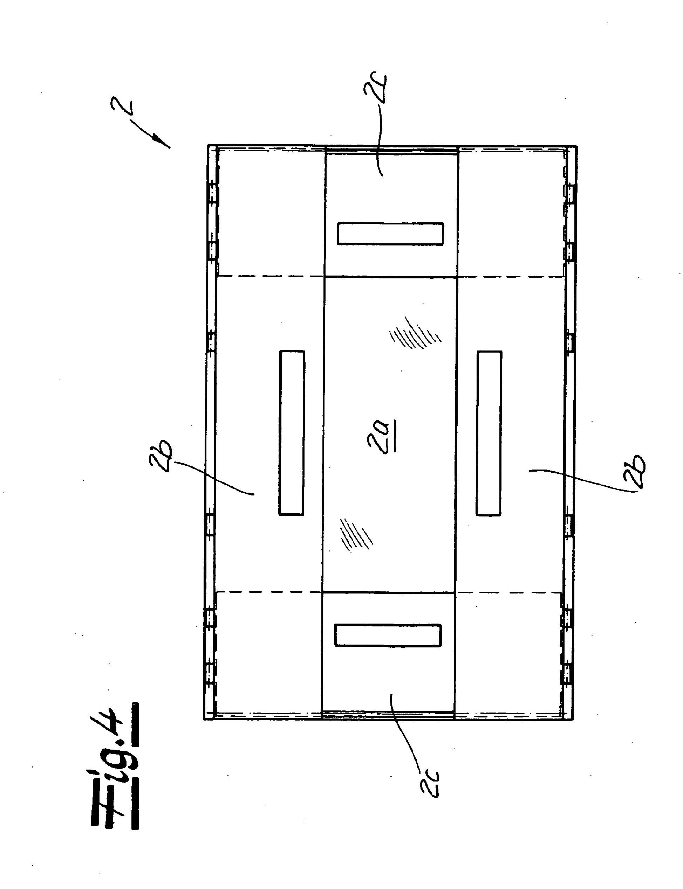

Die Zentriermittel bzw. Zentrierlaschen 3 greifen in die Zentrierausnehmungen respektive Zentriertaschen 4 zur gegenseitigen temporären Fixierung der beiden Transportbehälter 1, 2 zueinander ein. Auf diese Weise können die beiden Transportbehälter 1, 2 den dargestellten Stapel bzw. die Stapeleinheit bilden und sind zueinander kompatibel. Das ist insofern bemerkenswert, als der untere Transportbehälter 1 als Einwegverpackung 1 aus Pappe, insbesondere Wellpappe hergestellt ist, während es sich bei dem darauf aufgesetzten Transportbehälter 2 um eine Mehrwegverpackung 2 aus Kunststoff handelt. Im Rahmen des Ausführungsbeispiels und nicht einschränkend ist die Einwegverpackung 1 aus Pappe formstabil gestaltet. Dagegen lässt sich die Mehrwegverpackung 2 zusammenfalten, wie ein Vergleich der Figur 3 und 4 deutlich macht.

Insbesondere die Figur 5 zeigt, dass sich die Zentriermittel 3 und Zentrierausnehmungen 4 jeweils an den Längswänden 1b respektive 2b der zugehörigen Transportbehälter 1, 2 finden. Im Ausführungsbeispiel und nicht einschränkend ist die jeweilige Längswand 1b der Einwegverpackung 1 mit den Zentriermitteln bzw. Zentrierlaschen 3 ausgerüstet, wohingegen sich die Zentrierausnehmungen 4 an der zugehörigen Längswand 2b der Mehrwegverpackung 2 finden. Selbstverständlich kann auch umgekehrt vorgegangen werden. So oder so sind die Zentriermittel 3 und Zentrierausnehmungen 4 in einer gemeinsamen Stapelebene E angeordnet und greifen hier fixierend ineinander.

Diese Stapelebene E wird einerseits von der Unterkante des Bodens 2a der Mehrwegverpackung 2 und andererseits der Oberkante der Längswände 1b respektive der Querwände 1 c der Einwegverpackung 1 aufgespannt. Sobald die beiden Transportbehälter 1, 2 stapelnd aufeinandergesetzt sind, liegt die Oberkante der Längswände 1b respektive Querwände 1c der Einwegverpackung 1 am Boden 2a der Mehrwegverpackung 2 an.

Anhand der Figur 2 erkennt man, dass die Zentriermittel bzw. Zentrierlaschen 3 jeweils in Eckennähe und oberrandseitig an die Längswände 1b der Einwegverpackung 1 angeschlossen sind. In diesem Bereich ist die aus doppelwelliger Wellpappe hergestellte Einwegverpackung 1 zudem doppellagig respektive im Ausführungsbeispiel sogar dreilagig ausgeführt. Das heißt, im Bereich der Ecken finden sich zwei oder drei Lagen der doppelwelligen Wellpappe. Darüber hinaus sind die einzelnen Lagen der Wellpappe miteinander verklebt, weil die Einwegverpackung insgesamt aus einem Stanzzuschnitt aus der doppelwelligen Wellpappe hergestellt wird. Bei der doppelwelligen Wellpappe handelt es sich um eine so genannte BC-Welle, also eine Kombination einer Feinwelle und einer Mittelwelle, die miteinander verbunden sind. Das ist selbstverständlich nicht zwingend. Damit der Stanzzuschnitt und folglich die Einwegverpackung 1 ihre Formstabilität erreicht, werden die vier Ecken bzw. die Pappwände an dieser Stelle jeweils miteinander verklebt.

Die Mehrwegverpackung 2 ist aus Kunststoff, vorliegend einem thermoplastischen Kunststoff wie beispielsweise Polypropylen oder Polyethylen hergestellt. Anhand einer vergleichenden Betrachtung der Figuren 3 und 4 erkennt man, dass sich die Mehrwegverpackung 2 zusammenfalten lässt. Zu diesem Zweck sind die dortigen Längswände 2b und auch die Querwände 2c klappbar an den Boden 2a angeschlossen und lassen sich in aufgerichteter Position entsprechend der Figur 3 an den Ecken miteinander lösbar verbinden, so dass das Innere der solchermaßen realisierten Transportkiste für die Aufnahme von Waren genutzt werden kann. Sind nun die Waren entfernt, so können sowohl die Längswände 2b als auch die Querwände 2c auf den Boden 2a aufgeklappt werden, wie dies die Figur 4 darstellt. Dadurch verfügt die Mehrwegverpackung 2 für ihren Rücktransport zum erneuten Befüllen über ein deutlich geringeres Volumen als dieses in abgeklapptem Zustand der Längswände 2b und Querwände 2c der Fall wäre.

Im Rahmen der Figur 6 erkennt man, dass die Längswände 2b respektive der Boden 2a mit den Zentrierausnehmungen 4 ausgerüstet sind, die vorliegend als Zentriertaschen 4 gestaltet sind. In diese Zentriertaschen 4 greifen die Zentriermittel bzw. Zentrierlaschen 3 an der Einwegverpackung 1 ein oder können natürlich auch nicht dargestellte Zentrierlaschen 3 einer weiteren Mehrwegverpackung 2 Platz finden. Um das Aufsetzen der Mehrwegverpackung 2 auf die Einwegverpackung 1 im Beispielfall zu erleichtern, verfügt die jeweilige Zentrierlasche 3 ausweislich der Figur 5 über eine Einführschräge 5.

Dabei sind die Einführschrägen 5 der insgesamt vier Zentrierlaschen 3 einander zugewandt an den jeweiligen Längswänden 1b der Einwegverpackung 1 angeordnet (vgl. Figur 2). Auf diese Weise gleiten die Einführschrägen 5 an jeweils den inneren Kanten der Einführtaschen 4 der Mehrwegverpackung 2 entlang und sorgen dafür, dass die Mehrwegverpackung 2 beim Aufsetzen auf die Einwegverpackung 1 zentriert wird. Sobald die Zentrierlasche 3 in die Zentriertasche 4 vollständig eingetaucht ist, liegen die Zentrierausnehmung 4 und die Zentrierlasche bzw. das Zentriermittel 4 mit ihrer größten Ausdehnung jeweils in Längsrichtung der zugehörigen Transportbehälter 1, 2 aneinander. Dadurch werden die beiden Transportbehälter 1, 2 einwandfrei in Längsrichtung zueinander ausgerichtet. Auch eine Ausrichtung in Querrichtung erfolgt, weil die Länge der Zentrierlasche 3 an die Länge der Zentriertasche 4 in Längsrichtung der beiden Transportbehälter 1, 2 angepasst ist. Jedenfalls erfahren die beiden Transportbehälter 1, 2 eine gegenseitige und temporäre Fixierung zueinander und können problemlos und wechselweise gestapelt werden bzw. die angesprochene Stapeleinheit bilden.

## Patentansprüche

1. Stapeleinheit aus wenigstens zwei übereinander angeordneten Transportbehältern (1, 2), wobei
- der jeweilige Transportbehälter (1, 2) aus Pappe, Wellpappe, Kunststoff oder dergleichen hergestellt ist und einen Boden (1 a; 2a) sowie Längswände (1 b; 2b) und Querwände (1 c; 2c) aufweist, wobei ferner
- die beiden Transportbehälter (1, 2) zumindest im Bereich ihrer gemeinsamen Stapelebene (E) mit in Zentrierausnehmungen (4) eingreifenden Zentriermitteln (3) zur gegenseitigen temporären Fixierung ausgerüstet sowie der eine Transportbehälter (1) als Einwegverpackung (1) und der andere Transportbehälter (2) als Mehrwegverpackung (2) ausgestaltet sind, und wobei
- die jeweiligen Längswände (1 b; 2b) des Transportbehälters (1, 2) mit den Zentriermitteln (3) und/oder den Zentrierausnehmungen (4) ausgerüstet sind,
**dadurch gekennzeichnet, dass**
- das jeweilige Zentriermittel (3) mit wenigstens einer Einführschräge (5) ausgerüstet ist, um das Aufsetzen und gegenseitige Eingreifen der Zentriermittel (3) und Zentrierausnehmungen (4) zu erleichtern und hierzu
- die Einführschräge (5) entlang einer Kante der Zentrierausnehmung (4) entlang gleitet, so dass durch diesen Vorgang das Zentriermittel (3) automatisch in die Zentrierausnehmung (4) eingeführt und am Ende des Zentriervorganges nahezu formschlüssig in die Zentrierausnehmung (4) eingreift, wobei
- die Einführschrägen (5) der insgesamt vier als jeweils Zentrierlasche (3) ausgebildeten Zentriermittel (3) einander zugewandt an den jeweiligen Längswänden (1 b) der Einwegverpackung (1) angeordnet sind und
- dadurch an jeweils inneren Kanten der als jeweils Zentriertasche (4) ausgebildeten Zentrierausnehmungen (4) entlang gleiten und dafür sorgen, dass
- die Mehrwegverpackung (2) beim Aufsetzen auf die Einwegverpackung (1) zentriert, sobald die Zentrierlasche (3) in die Zentriertasche (4) vollständig eingetaucht ist, wobei die Zentrierausnehmung (4) und das Zentriermittel (3) ihre größte Ausdehnung in Längsrichtung des jeweiligen Transportbehälters aufweisen und damit aneinander liegen und beide Transportbehälter (1, 2) einwandfrei in Längsrichtung zueinander ausgerichtet sind.

2. Stapeleinheit nach Anspruch 1, **dadurch gekennzeichnet, dass** die beiden Transportbehälter (1, 2) aus unterschiedlichen Materialien gefertigt sind, beispielsweise der obere Transportbehälter (2) aus Kunststoff und der untere Transportbehälter (1) aus Pappe oder Wellpappe, oder umgekehrt.

3. Stapeleinheit nach Anspruch 1 oder 2, **dadurch gekennzeichnet, dass** die Zentriermittel (3) jeweils in Eckennähe oberrandseitig an die Längswände (1b; 2b) angeschlossen sind und in die Zentrierausnehmungen (4) unterrandseitig der Längswände (1 b; 2b) eingreifen.

4. Stapeleinheit nach einem der Ansprüche 1 bis 3, **dadurch gekennzeichnet, dass** die Einwegverpackung (1) aus einem Stanzzuschnitt aus vorzugsweise doppelwelliger Wellpappe hergestellt ist.

5. Stapeleinheit nach Anspruch 4, **dadurch gekennzeichnet, dass** die doppelwellige Wellpappe als BC-Welle ausgestaltet ist.

6. Stapeleinheit nach einem der Ansprüche 1 bis 5, **dadurch gekennzeichnet, dass** die Mehrwegverpackung (2) aus Kunststoff, insbesondere einem thermoplastischen Kunststoff wie PP etc., hergestellt ist.

7. Stapeleinheit nach einem der Ansprüche 1 bis 6, **dadurch gekennzeichnet, dass** die Einwegverpackung (1) zumindest im Eckbereich doppellagig, vorzugsweise sogar dreilagig, ausgestaltet ist.

## Claims

1. A stacking unit consisting of at least two transport containers (1, 2), which are arranged on top of one another, wherein
- the respective transport container (1, 2) is made of cardboard, corrugated cardboard, plastic or the like, and encompasses a bottom (1 a; 2a) as well as longitudinal walls (1 b; 2b) and transverse walls (1 c; 2c), wherein furthermore,
- at least in the area of their common stacking plane (E), the two transport containers (1, 2) are equipped with centering means (3), which engage with centering recesses (4), for temporarily fixing one another, and the one transport container (1) is embodied as disposable packaging (1) and the other transport container (2) is embodied as reusable packaging (2), and wherein
- the respective longitudinal walls (1 b; 2b) of the transport container (1, 2) are equipped with the centering means (3) and/or with the centering recesses (4),
**characterized in that**
- the respective centering means (3) is equipped with at least one insertion chamfer (5) to facilitate the attaching and the mutual engaging of the centering means (3) and centering recesses (4) and, for this purpose,
- the insertion chamfer (5) slides along an edge of the centering recess (4), so that the centering means (3) is automatically inserted into the centering recess (4) by means of this process and engages with the centering recess (4) in a virtually form-fitting manner at the end of the centering process, wherein
- the insertion chamfers (5) of the total of four centering means (3), which are in each case embodied as centering tab (3), are arranged so as to face one another on the respective longitudinal walls (1 b) of the disposable packaging (1) and
- thus in each case slide along inner edges of the centering recesses (4), which are in each case embodied as centering pocket (4) and ensure that
- the reusable packaging (2) is centered when being attached to the disposable packaging (1) as soon as the centering tab (3) has been inserted completely into the centering pocket (4), wherein the centering recess (4) and the centering means (3) encompass their largest expansion in longitudinal direction of the respective transport container and thus adjoin one another, and both transport containers (1, 2) are oriented correctly in longitudinal direction relative to one another.

2. The stacking unit according to claim 1, **characterized in that** the two transport containers (1, 2) are made of different materials, the upper transport container (2), for example, is made of plastic and the lower transport container (1) is made of cardboard or corrugated cardboard, or vice versa.

3. The stacking unit according to claim 1 or 2, **characterized in that**, on the upper edge side in the vicinity of the corners, the centering means (3) are in each case connected to the longitudinal walls (1b; 2b) and, on the bottom edge side of the longitudinal walls (1 b; 2b), engage with the centering recesses (4).

4. The stacking unit according to one of claims 1 to 3, **characterized in that** the disposable packaging (1) is made of a die cut, preferably of doublefluted corrugated cardboard.

5. The stacking unit according to claim 4, **characterized in that** the doublefluted corrugated cardboard is embodied as BC flute.

6. The stacking unit according to one of claims 1 to 5, **characterized in that** the reusable packaging (2) is made of plastic, in particular a thermoplastic plastic, such as PP, etc..

7. The stacking unit according to one of claims 1 to 6, **characterized in that**, at least in the corner area, the disposable packaging (1) is embodied in a two-ply, preferably even in a three-ply manner.

## Revendications

1. Unité à empiler constituée d'au moins deux conteneurs de transport (1, 2) superposés,
- le conteneur de transport (1, 2) concerné étant fabriqué en carton, en carton ondulé, en matière plastique ou similaires et comportant un fond (1 a ; 2a), ainsi que des parois longitudinales (1b ; 2b) et des parois latérales (1c ; 2c), par ailleurs
- les deux conteneurs de transport (1, 2) étant équipés au moins dans la zone de leur plan d'empilage (E) de moyens de centrage (3) s'engageant dans des évidements de centrage (4) pour la fixation temporaire réciproque et l'un (1) des conteneurs de transport étant équipé en tant que conteneur jetable (1) et l'autre conteneur de transport (2) étant équipé en tant que conteneur réutilisable (2) et
- les parois longitudinales (1b; 2b) concernées du conteneur de transport (1, 2) étant équipées des moyens de centrage (3) et/ou des évidements de centrage (4),
**caractérisée en ce que**
- le moyen de centrage (3) concerné est équipé d'au moins une inclinaison d'introduction (5) pour faciliter le placement et l'engagement réciproque des moyens de centrage (3) et des évidements de centrage (4) et à cet effet,
- l'inclinaison d'introduction (5) coulisse le long d'une arête de l'évidement de centrage (4), de sorte que par cette opération, le moyen de centrage (3) s'introduise automatiquement dans l'évidement de centrage (4) et à la fin de l'opération de centrage s'engage pratiquement par complémentarité de forme dans l'évidement de centrage (4),
- les inclinaisons d'introduction (5) des quatre moyens de centrage (3) au total conçus chacun en tant que pattes de centrage (3) étant disposées en se faisant face sur les parois longitudinales (1 b) concernées de l'emballage jetable (1) et
- coulissant de ce fait le long d'arêtes chaque fois intérieures des évidements de centrage (4) conçus en tant que poches de centrage (4) et assurant que
- lors du placement sur l'emballage jetable (1), l'emballage réutilisable (2) soit centré dès que la patte de centrage (3) a plongé totalement dans la poche de centrage (4), l'évidement de centrage (4) et le moyen de centrage (3) présentant leur plus grande extension dans la direction longitudinale du conteneur de transport concerné et étant adjacents de ce fait et les deux conteneurs de transport (1, 2) étant parfaitement alignés l'un vers l'autre, dans la direction longitudinale.

2. Unité à empiler selon la revendication 1, **caractérisée en ce que** les deux conteneurs de transport (1, 2) sont fabriqués dans des matériaux différents, par exemple le conteneur de transport (2) supérieur en matière plastique et le conteneur de transport (1) inférieur en carton ou en carton ondulé ou inversement.

3. Unité à empiler selon la revendication 1 ou la revendication 2, **caractérisée en ce que** les moyens de centrage (3) sont raccordés chacun sur le côté du bord supérieur, à proximité des coins aux parois longitudinales (1b ; 2b) et s'engagent dans les évidements de centrage (4) du côté du bord inférieur des parois longitudinales (1b ; 2b).

4. Unité à empiler selon l'une quelconque des revendications 1 à 3, **caractérisée en ce que** l'emballage jetable (1) est fabriqué par une coupe à façon par estampage d'un carton de préférence double ondulé.

5. Unité à empiler selon la revendication 4, **caractérisée en ce que** le carton double ondulé est conçu en tant qu'ondulé BC.

6. Unité à empiler selon l'une quelconque des revendications 1 à 5, **caractérisée en ce que** l'emballage réutilisable (2) est fabriqué en matière plastique, notamment en une matière thermoplastique, comme le PP, etc.

7. Unité à empiler selon l'une quelconque des revendications 1 à 6, **caractérisé en ce qu'**au moins dans la zone des coins, l'emballage jetable (1) est équipé à double couche, de préférence même à triple couche.
